# EUROPEAN PATENT SPECIFICATION

(11) **EP 1 529 795 B1**
(45) Date of publication and mention of the grant of the patent: **20.12.2006**
(21) Application number: 04025584.6
(22) Date of filing: 27.10.2004
(51) Int. Cl.: C08G 63/16, C08L 67/02, C08K 5/00

(54) **Polyester sealing resin composition**
Polyesterzusammensetzungen für Dichtungsmassen
Composition d'étanchéité à base de polyester

(30) Priority: 10.11.2003 JP 2003379606
(43) Date of publication of application: 11.05.2005
(73) Proprietor: OMRON CORPORATION, Kyoto-shi, Kyoto 600-8530 (JP)
(72) Inventor: Konishi, Giichi Omron Corporation, Shiokoji-dori Shimogyo-ku Kyoto 600-8530 (JP)
(74) Representative: Kilian, Helmut

(56) References cited:
- EP-A- 0 763 567
- US-B2- 6 300 405

## Description

### BACKGROUND OF THE INVENTION

### Field of the Invention

The present invention relates to a method for producing an electric or electronic component using a polyester sealing resin composition.

### Background Art

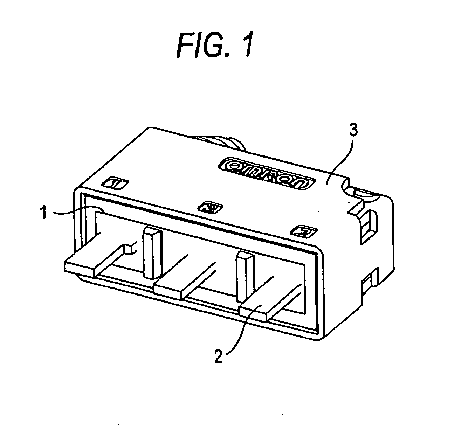

For example, as a waterproof type micro switch capable of prohibiting intrusion of water and dust to the inside thereof, there is one having a constitution, as shown in Fig. 1, in which a case main body 1 having been fitted with a snap action type switch mechanism is inserted into an opening of a cover case 3 having been molded separately followed by pouring and hardening a molding material such as epoxy resin to seal a fitted portion of the main body case 1 and the cover case 3, and a leading portion of a lead terminal 2 protruding from the bottom face of the main body case 1.

As for a sealing means using a resin molding material, sealing and molding employing 2-liquid epoxy resin has been generally employed (for example, JP-A-1-75517, claims etc.; JP-A-2000-239349, claims etc.). In the means, a base resin and a hardener are mixed at a certain ratio just before the sealing and molding to carry out sealing and molding at a low viscosity, which is heated and stored for from several hours to several days to facilitate hardening reaction and complete hardening. However, in this method, some problems are known such that there is an adverse effect of pre-hardening reactive epoxy to human body and environment, an accurate mixture ratio adjustment of two liquids is required, and a usable period before the mixing is limited to be short such as from 1 to 2 months. In addition, there is such a problem that productivity is low because of requirement of a curing period of from several hours to several days for hardening. There is such an additional problem that stress caused by resin contraction after hardening concentrates at a portion having a weak physical strength such as a soldered portion connecting an electric and electronic component and a conducting wire to lead to separation of the portion. Furthermore, a resin molding material has a higher material cost compared with a resin material for molding a case main body or a cover case to incur a high cost.

As a sealing and molding resin in place of the 2-liquid epoxy resin, a resin of hot-melt type can be mentioned. A hot-melt adhesive that is subjected only to heating and melting to decrease viscosity at sealing and molding can solve the problem of work environment in the epoxy resin system. Further, since it hardens only by cooling after sealing and molding to exert capability, it realizes a high productivity. In addition, general use of a thermoplastic resin makes it possible to recycle members easily by heating the resin to melt and remove it even after the end of the life as a product. However, in spite of having a high potential ability as a sealing and molding resin, up to now it can not be a material for substituting sufficiently the 2-liquid epoxy resin. This is attributable to the fact that no raw material suitable for the purpose has been proposed.

For example, ethylene vinyl acetate (EVA), which is relatively cheap as a hot-melt material, has an insufficient heat resistance, and not only has no durability under circumstances where an electric and electronic component is used, but also could lead to decrease in electric capability of the electric and electronic component caused by contamination since various additives are incorporated in it for the purpose of exhibiting adherence. Polyamide, which exhibits a high adherence to various raw materials by the resin alone, is excellent as a sealing and molding resin material, since it has a low molten viscosity and a high resin strength ( for example, European Patent No. 1052595, pp 6-8, claims etc. ) . However, it has a high moisture-absorption characteristics originally and absorbs moisture gradually from outside to decrease often electric insulation, which is the most important property, with a lapse of time.

On the other hand, a polyester-based hot melt material, which has a high electric insulation and water resistance at the same time, is thought to be a very useful material for this application. However, for an application requiring flame resistance, addition of a flame resistant agent becomes necessary, and no material or molding method in which the flame resistance and adhesiveness to a base material are balanced has been proposed.

In the case of an injection molding method using thermoplastic resin, since there is no resin having a low viscosity and a high flowability at a relatively low temperature region and, in addition, being suitable for sealing from a viewpoint of electric properties and the like, molding is often carried out at a relatively high temperature and pressure. In an injection molding method, it is often used at a resin temperature of 250 °C or more and an injection pressure of around 2940 to 4900 N/cm². When the resin is injected at such a high temperature and pressure, a component to be sealed is tend to be damaged to generate deformation and the like, leading to impair function and reliability to be exerted.

As described above, in conventional arts, material or method that satisfies various capabilities as a sealing and molding resin for an electric and electronic component, especially a micro switch component, has not been proposed.

A polyester sealing resin composition comprising a polyester resin, antimony trioxide and polydibromastyrene is known from EP-A-0763567 and US-B-6300 405.

### SUMMARY OF THE INVENTION

The invention is accomplished with the view of the above described context, and intends to provide a method for producing an electric or electronic component using a sealing and molding resin composition capable of carrying out sealing without impairing function and reliability of the electric and electronic component to be sealed, and yielding especially a switch component excellent in water resistance, durability and flame resistance.

### BRIEF DESCRIPTION OF THE DRAWING

Fig. 1 is a perspective view of a snap action type switch.

### DETAILED DESCRIPTION OF THE INVENTION

The invention is as defined in claim 1.

The polyester resin (A) constituting the polyester sealing resin composition according to the invention desirably has a molten viscosity of 1000 dPa·s or less, preferably 700 dPa·s or less, and more preferably 500 dPa·s or less at 200°C. Here, the molten viscosity at 200°C is a value being measured as follows. By using a sample having been dried to a moisture percentage of 0.1% or less, viscosity is measured when polyester resin heated to and stabilized at 200°C is made to pass through a die having a hole of 1.0 mm in diameter and a thickness of 10 mm at a pressure of 98 N/cm² with a flow tester (made by Shimadzu Corporation, type CFT-500C). When the molten viscosity becomes such a high value as 1000 dPa·s or more, flowability to a fine portion of a micro switch component and the like becomes insufficient. Upon using the aforementioned polyester, by making a polyester sealing resin composition have a molten viscosity of 1000 dPa · s or less, it becomes possible to seal an electric and electronic component such as a micro switch component into a simple die under atmospheric pressure at a relatively low injection pressure of several hundreds N/cm², without impairing electric properties of the component. A lower molten viscosity at 200 °C is preferable but, in consideration of adhesiveness and cohesive power of the resin, the desirable lower limit is 100 dPa·s or more.

Further, in order to accomplish sealing and molding without a thermal damage of the polyester resin (A) as far as possible, since speedy melting at 200 to 220°C is required, the upper limit of the melting point is desirably 200°C. A desirable lower limit is at a temperature higher than a heat resistant temperature required for the relevant application by 5 to 10°C. In consideration of handling properties at ordinary temperature and normal heat resistant properties, it is 70°C or more.

The polyester resin (A) for use in the invention is consisting of a dicarboxylic acid component and diol component. Examples of the dicarboxylic acid include aromatic carboxylic acid such as terephthalic acid and isophthalic acid, and aliphatic dicarboxylic acid such as adipic acid and sebacic acid. Examples of the diol include aliphatic glycol such as ethylene glycol, 1,4-butane diol and polyoxymethylene glycol.

On the other hand, since a lower glass transition temperature improves cryogenic cycle durability, the polyester resin (A) desirably has a glass transition temperature of -10°C or less, preferably -50°C or less.

The polyester resin (A) is desirably a saturated polyester resin containing no unsaturated group. An unsaturated polyester may form cross-link and the like at melting to lead sometimes to a poor melting stability at sealing and molding.

Here, as for the glass transition temperature and the melting point of the polyester resin (A), values measured by using a differential scanning calorimeter (made by Seiko Instruments Co., Ltd. , type DSC220) are used, as listed in the section of Examples. However, other differential scanning calorimeters employing the same principle and method can measure them.

As for the method for determining formation and formation ratio of the polyester resin (A), for example, ¹H-NMR, in which measurement is carried out by dissolving the polyester resin in a solvent such as heavy chloroform, is simple and preferable.

As for the method for producing the polyester resin (A), publicly know methods can be employed. For example, the aforementioned dicarboxylic acid and diol components are subjected to esterification reaction at 150 to 250°C followed by polycondensation under a reduced pressure at 230 to 300 °C to give the targeted polyester. Alternatively, a derivative such as dimethyl ester of the aforementioned dicarboxylic acid and the diol component are subjected to ester exchange reaction at 150 to 250°C followed by polycondensation under a reduced pressure at 230 to 300°C to give the targeted polyester.

Antimony trioxide (B) and polydibromostyrene (C) for use in the invention as a flame resistant agent are incorporated, while defining the polyester as (A), at a weight ratio of (A):((B)+(C))=100:20 to 30 and (B):(C)=1:1 to 4. When the flame resistant agent volume ( (B)+(C) ) is less than 20, flame resistance is insufficient, and more than 30, a problem of flowability at molding or adhesiveness to the base member after molding may occur. As for the ratio of antimony trioxide (B) and polydibromostyrene (C), a ratio of (C) more than 4 makes adhesiveness poor, and less than 1 makes flame resistance insufficient.

For the purpose of improving adhesiveness, flexibility, durability and the like, the polyester sealing resin composition according to the invention may be compounded with another resin such as polyester of other formation, polyamide, polyolefin, epoxy, polycarbonate, acrylic resin, ethylene vinyl acetate resin or phenol resin, a filler such as talc or mica, a pigment such as carbon black or titanium oxide, or an antioxidant. Even in that case, preferably the polyester resin (A) is incorporated by 50 % by weight or more, preferably 80% by weight or more to the whole composition. Content of the polyester of less than 50% by weight may decrease an excellent fixing adhesiveness to an electric and electronic component, various durabilities and water resistance which are inherent in the polyester resin itself.

The polyester sealing resin composition according to the invention can sealing and molding an electronic component such as a micro switch component by using an atmosphere-opening type simple die. Here, a method for sealing and molding an electronic component such as a switch component and the like by using the polyester sealing resin composition according to the invention using an atmosphere-opening type simple die, and a method for producing an electric and electronic component such as a switch and the like by using the method will be provided. The sealing and molding using an atmosphere-opening type simple die means a sealing and molding using a simple die having a sufficient opening so as to allow the resin injected at 10 to 686 N/cm² to become a pressure of atmospheric pressure in the die. The principle is the same as that for a usual injection molding, that is, molten resin is injected in a simple die in which an electric and electronic component has been set to encompass the component, allowing the delicate component to be sealed and molded without destruction.

More specifically, it suffices to heat and melt the polyester sealing resin composition according to the invention in a heating tank at around 130 to 220°C to be injected into a simple die through an injection nozzle, and to dismount the molded member from the simple die after the elapse of a certain cooling time.

For example, in order to seal a switch component, it suffices to fit internally a case main body provided with a switch mechanism into an opening of a cover case, and to seal and mold the fitted portion of the case main body and the cover case and a leading portion of a conductor protruding from the case main body with the polyester resin composition. When the conductor is constituted by a lead wire connected to a lead terminal protruding from the case main body, it suffices to seal and mold the connection portion of the lead terminal and the lead wire such that it is laid in the polyester resin composition.

There is no particular restriction on equipment for sealing and molding. A conventional molding die has a complex die construction including such as a cavity core for forming a molded member, a runner sprue for leading resin to the cavity core, a formboard for holding these, a mounting plate for mounting them to an injection apparatus and a mechanism for extruding a product, making the die expensive. The simple die usable for the invention has a simple construction consisting of a cavity core for forming a sealing and molding portion, a gate portion for injecting resin, a through-hole for position-determining and extruding a production, and cost of the die is at a level as low as that of a jig. Further, it has a simple die construction having a sufficient opening so as to make the injected resin become a pressure of atmospheric pressure in the die.

The present invention has provided a polyester sealing resin composition suitable for an electric and electronic component such as a switch. Use of the polyester sealing resin composition according to the invention enables to give an electronic component such as a switch component excellent in water resistance, durability and flame resistance.

### EXAMPLES

For the purpose of explaining the invention in more detail, Examples will be given hereinafter. However, no restriction is placed on the invention by the Examples. Each of measured values described in the Examples was obtained by the following measuring method.

Melting point and a glass transition temperature: a differential scanning analyzer type DSC220 made by Seiko Instruments Co. , Ltd. was used. 5 mg of a sample to be measured was placed in an aluminum pan whose cap was put to seal. The pan was once hold at 250°C for 5 minutes to melt the sample completely followed by rapid cooling with liquid nitrogen, and then temperature thereof was risen from -150 °C to 250° C at a temperature rising rate of 20°C/min. The inflexion point and the endothermic peak were defined as the glass transition temperature and the melting point, respectively.

Molten viscosity: a flow tester (type CFT-500C) made by Shimadzu Corporation was used. The melting point was calculated according to the steps of filling up a cylinder placed at the center of a heating body set to 200 °C with a resin sample having been dried to 0.1 % or less of moisture percentage , adding a load (98 N) to the sample via a plunger at one minute after the filling to extrude the molten sample from a die (hole diameter: 1.0 mm, thickness: 10 mm) at the bottom of the cylinder, and recording a fall distance and fall time of the plunger.

### Example of preparing polyester resin

244 parts by weight of naphthalene dimethy dicarboxylate, 180 parts by weight of 1,4-butanediol and 0.25 parts by weight of tetrabutyl titanate were added to a reaction can provided with a stirrer, a thermometer and a condenser for distillation to carry out esterification reaction at 170 to 220°C for 2 hours. After the end of the esterification reaction, 800 parts by weight of polytetramethylene glycol "PTMG 2000" having a number average molecular weight of 2000 (made by Mitsubishi Chemical Corporation) and 0.5 parts by weight of a hindered phenol antioxidant "Irganox 1330" (made by Chiba Geigy) were thrown in, and the temperature was increased up to 255 °C while reducing the pressure in the system gradually to 660 Pa at 255°C over 60 minutes. An additional polycondensation reaction was carried out at 130 Pa or less for 30 minutes to give the polyester resin (A).

The polyester resin (A) had a melting point of 155 °C and a molten viscosity of 500 dPa · s. An NMR analysis thereof taught that the final formation was naphthalene dicarboxylic acid// butanediol/ polytetramethylene glycol = 100// 60/ 40 (mol%).

In a similar way, polyester (B) having the final formation of terephthahlic acid// butanediol/ polytetramethylene glycol (molecular weight of 1000) = 100// 70/ 30 (mol%), and polyester (C) having the final formation of terephthahlic acid/ isophthalic acid// butanediol = 56/ 42// 100 (mol%) were prepared. Physical property values of respective samples (molten viscosity, melting point, glass transition temperature) are listed in Table 1.

**Table 1**

| Polyester resin | (A) | (B) | (C) |
|---|---|---|---|
| Molten viscosity (dPa·s, 200°C) | 500 | 300 | 500 |
| Melting poing (°C) | 155 | 160 | 125 |
| Glass transition temperature ( °C) | -65 | -70 | 25 |

### Example of preparing a polyester resin composition

A polyester resin composition (D) was obtained by mixing uniformly 83 parts by weight of the polyester resin (A), 7 parts by weight of antimony trioxide and 10 parts by weight of polydibromostyrene as a flame resistant agent followed by kneading the same in a molten state using a biaxial extruder at a die temperature of 170°C. Polyester resin compositions (E) to (G) were prepared by a similar method. Respective formations are listed in Table 2.

**Table 2**

| Polyester resin composition | Example (D) | Example (E) | Comparative example (F) | Comparative example (G) |
|---|---|---|---|---|
| Polyester resin | (A) | (A) | (B) | (C) |
| | 83 | 81 | 76 | 81 |
| Antimony trioxide (Pyrogurd AN-800^{*3}) | 7 | 4 | 6 | 4 |
| Polydibromostyrene (PDBS-80^{*4}) | 10 | 15 | 18 | 15 |
| Molten viscosity (dPa·s, 200°C) | 600 | 600 | 400 | 600 |

| | | | | |
|---|---|---|---|---|
| ^{*3}) made by DAl-ICHl KOGYO SEIYAKU CO., LTD | | | | |
| ^{*4}) made by Great Lakes Chemical Corp | | | | |

As a sealing and molding resin, four kinds of polyester resin compositions (D) to (G) were molten at 200 °C and, while keeping a die side at atmospheric pressure, injection molding was carried out with an applicator for injection molding.

A material to be sealed and molded was a switch component soldered with two lead wires of vinyl chloride, which was sealed and molded by using a simple die for sealing and forming with inside dimension of (20 mm x 7 mm x 6 mm) made of aluminum.

By using the obtained sealed and formed object, evaluation tests were carried out. In the evaluation tests, evaluation was carried out employing insulation resistance values before and after respective evaluation tests, respectively, as a parameter.

In a initial water resistance test, the sealed and molded object was dipped wholly in water by around 20 to 30 cm while applying 500 v for 1 minute, then, whether an insulation resistance value satisfied the standard (100 MΩ or more) or not was evaluated with following ranks.
○: 100 MΩ or more
Δ: 50 or more and less than 100 MΩ

In a cryogenic cycle durability test, a sealed and molded object that had passed the initial water resistance test was subjected to a cryogenic cycle durability test (10 cycles while defining -40°C 2 hours × 85°C 2 hours as one cycle), which was then dipped wholly in water at a constant depth of around 20 to 30 cm as was the case with the initial water resistance evaluation while applying DC 500V for 1 minute, and then whether an insulation resistance value satisfied the standard (10 MΩ or more) or not was evaluated with following ranks.
○: 10 MΩ or more
Δ: 10 MΩ or more for 30 seconds or more continuously
×: less than 10 MΩ

In a high temperature shelf life test, a sealed and molded object that had passed the initial water resistance test was subjected to a high temperature shelf life test (86°C, 200 hours), which was then dipped wholly in water at the same constant depth of around 20 to 30 cm as was the case with the initial water resistance evaluation while applying DC 500V and, during 1 minute, whether an insulation resistance value satisfied the standard (10 MΩ or more) or not was evaluated with following ranks.
○: 10 MΩ or more
Δ: 10 MΩ or more for 30 seconds or more continuously
×: less than 10 MΩ

In a 1m*24hr water resistance test, a sealed and molded object that had passed the initial water resistance test was dipped wholly in water at a depth of 1 m and then, after 24 hours, was dipped wholly in water at a constant depth of around 20 to 30 cm as was the case with the initial water resistance evaluation while applying DC 500V for 1 minute, and then, whether an insulation resistance value satisfied the standard (10 MΩ or more) or not was evaluated with following ranks.
○: 10 MΩ or more
×: less than 10 MΩ

In a flame resistance evaluation, a polyester resin composition was coated on a polyimide film having a thickness of 25 ìm so as to give a dried thickness of 30 ìm and dried at 120°C for 3 minutes. Then evaluation was carried out by using a test piece of 125mm in length*12.5mm in width based on the Subject No. 94 (UL94) that was standardized by Underwriters Laboratories Inc. (UL), U.S.A.

(Judgment) A test piece that had passed the test at flame resistance class V-1 was judged to be O, and one that had not passed was judged to be ×.

The results are collectively listed in Table 3.

**Table 3**

| Polyester resin composition | Example (D) | Example (E) | Comparative example (F) | Comparative example (G) |
|---|---|---|---|---|
| Initial water resistance (adhesiveness) | ○ | ○ | Δ | Δ |
| Cryogenic cycle durability | ○ | ○ | Δ | × |
| High temperature shelf life | ○ | ○ | ○ | ○ |
| 1m*24hr Water resistance | ○ | ○ | × | × |
| Flame resistance | ○ | ○ | ○ | ○ |

As shown in Tables 1 and 3, use of the polyester resin compositions (D) and (E) according to the invention gives good properties for a switch component in both cases but, on the other hand, use of the polyester resin compositions (F) and (G), which do not satisfy properties of the polyester resin composition according to the invention, resulted in large degradation of properties of a molded object.

## Claims

1. A method for producing an electric or electronic component comprising the step of sealing said electric or electronic component by using a polyester sealing resin composition comprising a polyester resin (A) having a molten viscosity of 1000 dPa·s or less at 200°C, a glass transition temperature of -10°C or less and a melting point of 70°C to 200°C, and antimony trioxide (B) and polydibromostyrene (C) as a flame resistant agent at a weight percentage of (A) : ((B) + (C))=100:20 to 30 and (B) : (C)=1:1 to 4 and an atmosphere-opening simple die into which the electric or electronic component is set for being sealed by said sealing resin composition.

2. The method for sealing an electric and electronic component according to claim 1 wherein the electric and electronic component is a switch.

3. The method for sealing an electric and electronic component according to claim 2, comprising the steps of internally fitting a case main body provided with a switch mechanism in a opening of a cover case, and sealing a fitted portion of the case main body and the cover case and a leading portion of a conductor protruding from the case main body with the polyester resin composition.

4. The method for sealing an electric and electronic component according to claim 3, wherein the conductor is constituted of a lead wire connected to a lead terminal protruding from the case main body and a connecting portion of the lead terminal and the lead wire is buried in the polyester resin composition for sealing.

## Patentansprüche

1. Verfahren zur Herstellung einer elektrischen oder elektronischen Komponente, welches den Schritt des Versiegelns der elektrischen oder elektronischen Komponente unter Verwendung einer Polyester-Siegelungsharzzusammensetzung, die ein Polyesterharz (A) mit einer geschmolzenen Viskosität von 1000 dPa·s oder weniger bei 200°C, einer Glasübergangstemperatur von -10°C oder weniger und einem Schmelzpunkt von 70°C bis 200°C, und Antimontrioxid (B) und Polydibromstyrol (C) als Flammhemmer mit einem Gewichtsprozentsatz von (A) : ((B) + (C)) = 100:20 bis 30 and (B) : (C) = 1:1 bis 4 aufweist, und einer zu Atmosphäre öffnenden einfachen Form, in welche die elektrische oder elektronische Komponente für eine Versielung mit der Siegelungsharzzusammensetzung eingesetzt wird, aufweist.

2. Verfahren zur Versiegelung einer elektrischen und elektronischen Komponente nach Anspruch 1, wobei die elektrische und elektronische Komponente ein Schalter ist.

3. Verfahren zur Versiegelung einer elektrischen und elektronischen Komponente nach Anspruch 2, welches die Schritte des Einsetzens eines Gehäusegrundkörpers, welcher mit einem Schaltermechanismus versehen ist, in eine Öffnung eines Abdeckungsgehäuses und Versiegelns eines eingesetzten Abschnitts des Gehäusegrundkörpers und des Abdeckungsgehäuses und eines Leitungsabschnitts eines aus dem Gehäusegrundkörper herausragenden Leiters mit der Polyesterharzzusammensetzung aufweist.

4. Verfahren zur Versiegelung einer elektrischen und elektronischen Komponente nach Anspruch 3, wobei der Leiter aus einem mit einem aus dem Gehäusegrundkörper herausragenden Leitungsanschluss verbundenen Leitungsdraht gebildet ist, und ein Verbindungsabschnitt des Leitungsanschlusses und des Leitungsdrahts in der Polyesterharzzusammensetzung zur Versiegelung vergraben ist.

## Revendications

1. Procédé de production d'un composant électrique ou électronique comprenant l'étape consistant à rendre ledit composant électrique ou électronique étanche à l'aide d'une composition de résine polyester d'étanchement comprenant une résine polyester (A) ayant une viscosité à l'état fondu de 1 000 dPa.s ou moins à 200°C, une température de transition vitreuse de -10°C ou moins et un point de fusion allant de 70°C à 200°C, et un trioxyde d'antimoine (B) et du polydibromostyrène (C) en tant qu'agent ignifuge à un pourcentage pondéral de (A) : ( (B) + (C)) = 100:20 à 30 et (B) : (C) = 1:1 à 4 et d'une filière simple s'ouvrant à l'air libre dans laquelle le composant électrique ou électronique est ajusté pour être rendu étanche par ladite composition de résine d'étanchement.

2. Procédé d'étanchement d'un composant électrique et électronique selon la revendication 1, dans lequel le composant électrique et électronique est un commutateur.

3. Procédé d'étanchement d'un composant électrique et électronique selon la revendication 2, comprenant les étapes consistant à ajuster un corps principal de boîtier comprenant un mécanisme de commutateur à l'intérieur d'une ouverture d'un boîtier de couvercle et à rendre étanche une partie ajustée du corps principal de boîtier et du boîtier de couvercle et une partie conductrice d'un conducteur dépassant du corps principal de boîtier avec la composition de résine polyester.

4. Procédé d'étanchement d'un composant électrique et électronique selon la revendication 3, dans lequel le conducteur est constitué d'un fil conducteur relié à une borne conductrice dépassant du corps principal de boîtier et une partie de connexion de la borne conductrice et du fil conducteur est enfouie dans la composition de résine polyester à des fins d'étanchement.
